Europäisches Patentamt

European Patent Office

Office européen des brevets

(11) Veröffentlichungsnummer: **0 464 369 A1**

## (12) EUROPÄISCHE PATENTANMELDUNG

(21) Anmeldenummer: **91108753.4**

(22) Anmeldetag: **29.05.91**

(51) Int. Cl.5: **C01B 21/072**

(30) Priorität: **30.06.90 DE 4020905**

(43) Veröffentlichungstag der Anmeldung:
**08.01.92 Patentblatt 92/02**

(84) Benannte Vertragsstaaten:
**AT BE CH DE FR GB IT LI NL SE**

(71) Anmelder: **HOECHST AKTIENGESELLSCHAFT
Brüningstrasse 64
W-6230 Frankfurt/Main 80(DE)**

(72) Erfinder: **Dorn, Friedrich-Wilhelm, Dr.
Giselherweg 3
W-5030 Hürth(DE)**
Erfinder: **Zschach, Heinz
Menzelstrasse 1
W-5000 Köln(DE)**

(54) **Verfahren zur Herstellung von Aluminiumnitrid.**

(57) Zur Herstellung von feinteiligem Aluminiumnitrid durch Umsetzung von Hydroxiden des Aluminiums mit Kohlenstoff im Molverhältnis (1 : 1,5) bis (1 : 2,5) mahlt man die Hydroxide des Aluminiums gemeinsam mit Kohlenstoff, insbesondere Ruß, unter Verwendung einer nichtwäßrigen Mahlflüssigkeit intensiv. Nach Abtrennen der nichtwäßrigen Mahlflüssigkeit von der Suspension calciniert man das erhaltene Mahlgut unter Durchleiten von Stickstoff bei 400 bis 1000 °C. Nunmehr behandelt man das erhaltene Material unter intensiver Berührung mit Stickstoff 1 bis 100 Stunden bei 1400 bis 1700 °C, bevor man den im Umsetzungsprodukt enthaltenen überschüssigen Kohlenstoff durch Erhitzen auf 500 bis 900 °C in Kontakt mit Sauerstoff enthaltenden Gasen entfernt.

Man kann die Hydroxide des Aluminiums und den Kohlenstoff auch jeweils getrennt unter Verwendung einer nichtwäßrigen Mahlflüssigkeit intensiv mahlen und die erhaltenen Suspensionen vermischen.

EP 0 464 369 A1

Rank Xerox (UK) Business Services

Die vorliegende Erfindung betrifft ein Verfahren zur Herstellung von feinteiligem Aluminiumnitrid durch Umsetzung von Hydroxiden des Aluminiums mit Kohlenstoff im Molverhältnis (1 : 1,5) bis (1 : 2,5).

Aluminiumnitrid-Pulver dient zur Herstellung von Aluminiumnitrid-Sinterkörpern, die als Substrate für elektronische Schaltungen und als Gehäuse für integrierte Schaltkreise verwendet werden. An derartige keramische Sinterkörper werden hohe Anforderungen hinsichtlich Wärmeleitfähigkeit, Festigkeit sowie weiterer mechanischer und technischer Eigenschaften gestellt. Diese Anforderungen können nur eingehalten werden, wenn das verwendete Aluminiumnitrid-Pulver bestimmte vorgegebene Eigenschaften hinsichtlich Reinheit, Korngröße, Kornverteilung, Sinterfähigkeit und Verarbeitbarkeit besitzt.

Zur Herstellung von Aluminiumnitrid sind mehrere Reaktionswege bekannt; beispielsweise die Umsetzung von Aluminium-Metall mit Stickstoff, die Reaktion von Aluminiumhalogeniden mit Ammoniak und die Reduktion von Aluminiumoxid mit Kohlenstoff in Gegenwart von Stickstoff.

In der US-PS 4 618 592 ist die Herstellung von feinteiligem Aluminiumnitrid nach dem zuletzt genannten Reaktionsweg beschrieben. Danach erhält man ein reines, feinteiliges und gut sinterfähiges Aluminiumnitrid durch Umsatz von hochreinem Aluminiumoxid (99,99 % $Al_2O_3$, durchschnittlicher Teilchendurchmesser 0,52 $\mu m$, Verunreinigungen von Mg, Cr, Si, Zn, Fe, Cu, Ca, Ni, Ti jeweils maximal 30 mg/kg) mit Ruß (Aschegehalt: 0,08 %) sowie Stickstoff bei 1550 bis 1650 °C und anschließendes Abbrennen des Ruß-Überschusses mit sauerstoffhaltigen Gasen bei 750 bis 800 °C.

Nachteilig ist bei dem in der US-PS 4 618 592 beschriebenen Verfahren zur Herstellung von Aluminiumnitrid, daß hochreines und sehr feinkörniges $Al_2O_3$-Pulver als Einsatzstoff verwendet werden muß, welches sehr teuer ist, weil derartige $Al_2O_3$-Qualitäten nicht über den großtechnischen Bayer-Prozeß hergestellt werden können.

Es ist daher Aufgabe der vorliegenden Erfindung, ein Verfahren zur Herstellung von feinteiligem Aluminiumnitrid anzugeben, bei welchem technisch in geeigneter Reinheit und preisgünstig verfügbare Aluminiumverbindungen eingesetzt werden. Das wird erfindungsgemäß dadurch erreicht, daß man

a) die Hydroxide des Aluminiums gemeinsam mit Kohlenstoff, insbesondere Ruß, unter Verwendung einer nichtwäßrigen Mahlflüssigkeit intensiv mahlt,

b) die nichtwäßrige Mahlflüssigkeit von der Suspension unter Erhalt eines Mahlgutes abtrennt,

c) das Mahlgut unter Durchleiten von Stickstoff bei 400 bis 1000 °C calciniert,

d) das gemäß c) erhaltene Material unter intensiver Berührung mit Stickstoff 1 bis 100 Stunden bei 1400 bis 1700 °C behandelt,

e) den im Umsetzungsprodukt gemäß d) enthaltenen überschüssigen Kohlenstoff durch Erhitzen auf 500 bis 900 °C in Kontakt mit Sauerstoff enthaltenden Gasen entfernt.

Das Verfahren gemäß der Erfindung kann auch dahin abgeändert sein, daß man die Hydroxide des Aluminiums und den Kohlenstoff jeweils getrennt unter Verwendung einer nichtwäßrigen Mahlflüssigkeit intensiv mahlt und die erhaltenen Suspensionen vermischt.

Das Verfahren gemäß der Erfindung kann weiterhin wahlweise noch dadurch ausgestaltet sein, daß

aa) man die Hydroxide des Aluminiums vor ihrem Eintrag in die nichtwäßrige Mahlflüssigkeit bei Temperaturen bis zu 300 °C zur Entfernung ihres Haftwassers trocknet,

bb) die Hydroxide des Aluminiums Korngrößen $d_{50} > 2 \mu m$ aufweisen,

cc) der Kohlenstoff Korngrößen < 2 $\mu m$ aufweist,

dd) man das Mahlgut vor dem Calcinieren bei Temperaturen bis zu 300 °C trocknet,

ee) man das calcinierte Material unter Durchleiten von Stickstoff 0,1 bis 10 Stunden auf 1100 bis 1350 °C erhitzt,

ff) als wasserfreie Mahlflüssigkeit Kohlenwasserstoffe dienen,

gg) als wasserfreie Mahlflüssigkeit aliphatische Alkohole dienen,

hh) 2-Propanol verwendet ist,

ii) als Hydroxid des Aluminiums AlOOH verwendet ist,

jj) als Hydroxid des Aluminiums $Al(OH)_3$ verwendet ist.

Mit dem erfindungsgemäßen Verfahren wird ein feinkörniges Aluminiumnitrid erhalten, weil offensichtlich die Umhüllung der Hydroxide des Aluminiums mit Kohlenstoff das sonst auftretende Kornwachstum verhindert.

Beim Verfahren gemäß der Erfindung können als Sauerstoff enthaltende Gase Luft, Kohlendioxid, Stickstoff oder deren Mischungen verwendet werden.

Der Gegenstand der Erfindung wird durch die folgenden Beispiele erläutert, wobei die BET-Oberfläche nach der Methode von Brunauer, Emmett und Teller (vergl. Z. Anal. Chem. 238 (1968) Seiten 187 bis 193) bestimmt wurde und wobei $d_{90}$, $d_{50}$ und $d_{10}$ Partikel-Äquivalent-Durchmesser für die Werte 90 %, 50 % und 10 % der Verteilungssummenkurve (Masse) bezeichnen, die mit einem SEDIGRAPH 500 ET der Fa. Coulter Electronics bestimmt wurden.

Beispiel 1 (gemäß der Erfindung)

85 g haftwasserhaltiger Böhmit (AlOOH; mit 37,5 % Al, 40 ppm Na, 2 ppm Mg, 8 ppm Ca, 10 ppm $\overline{Si}$, $\overline{3}$ ppm Ti, 16 ppm Fe; BET-Oberfläche: 160 $m^2$/g; Kornverteilung: $d_{90}$ 21 $\mu$m, $d_{50}$ 5,7 $\mu$m, $d_{10}$ < 0,3 $\mu$m) wurden 5 Stunden bei 250 °C im Trockenschrank an Luft getrocknet, wonach 73,2 g getrockneter Böhmit erhalten wurden. Der getrocknete Böhmit wurde zusammen mit 25,5 g Ruß (flüchtige Bestandteile: 0,1 %; 0,4 ppm Na, 0,3 ppm Mg, 2,5 ppm Ca, 6 ppm Si, < 0,5 ppm Ti, 16 ppm Fe; BET-Oberfläche: 60 $m^2$/g) entsprechend einem Molverhältnis Al : C = 1 : 1,8 in 1 l 2-Propanol gegeben und gemeinsam 4 Stunden lang in einer Rührwerkskugelmühle vermahlen. Von der resultierenden Suspension wurde das 2-Propanol abdestilliert und das Mahlgut getrocknet.

Das Mahlgut von 10 Ansätzen der beschriebenen Art wurde vereinigt und unter Durchleiten von Stickstoff zunächst 1,5 Stunden bei 450 °C und anschließend 2 Stunden bei 700 °C calciniert.

615 g dieses Calcinates wurden in einem Graphittiegel (12 cm Innendurchmesser) unter Durchleiten von 500 l/h Stickstoff 1,5 Stunden bei 1250 °C erhitzt und anschließend 11,5 Stunden bei 1600 °C behandelt. Nach dem Abkühlen wurde der Gewichtsverlust zu 38,8 % ermittelt. Nach einstündigem Erhitzen des Reaktionsproduktes an Luft auf 700 °C wurde unter einem Gewichtsverlust von 8,9 % weißes Aluminiumnitrid (AlN; mit 1,1 % O, 0,03 % C, < 20 ppm Na, < 5 ppm Mg, < 10 ppm Ca, 20 ppm Si, < 5 ppm Ti, 28 ppm Fe; BET-Oberfläche: 3,6 $m^2$/g; Kornverteilung: $d_{90}$ 2,45 $\mu$m, $d_{50}$ 1,28 $\mu$m, $d_{10}$ 0,86 $\mu$m; $\alpha$-$Al_2O_3$ nicht nachweisbar) erhalten.

Beispiel 2 (gemäß der Erfindung)

Beispiel 1 wurde mit der Änderung wiederholt, daß der getrocknete Böhmit und der Ruß nur 1 Stunde lang in 2-Propanol in der Rührwerkskugelmühle vermahlen wurden.

Das resultierende Aluminiumnitrid enthielt 0,9 % O und 0,04 % C; seine BET-Oberfläche betrug 2,5 $m^2$/g und seine Kornverteilung $d_{90}$ 5,1 $\mu$m, $d_{50}$ 2,0 $\mu$m, $d_{10}$ 0,8 $\mu$m.

Beispiel 3 (gemäß der Erfindung)

Beispiel 1 wurde mit der Änderung wiederholt, daß der getrocknete Böhmit und der Ruß nur 0,25 Stunden lang in 2-Propanol in der Rührwerkskugelmühle vermahlen wurden. Das resultierende Aluminiumnitrid enthielt 0,8 % O und 0,05 % C; seine BET-Oberfläche betrug 1,6 $m^2$/g und seine Kornverteilung $d_{90}$ 11 $\mu$m, $d_{50}$ 4,2 $\mu$m, $d_{10}$ 1,35 $\mu$m.

Beispiel 4 (gemäß der Erfindung)

Beispiel 1 wurde mit den Änderungen wiederholt, daß 205 g Calcinat im Graphittiegel unter Durchleiten von 200 l/h Stickstoff 63 Stunden bei 1450 °C behandelt wurden.

Das resultierende Aluminiumnitrid enthielt 1,3 % O, 0,03 % C und 0,3 % $\alpha$-$Al_2O_3$, seine Kornverteilung betrug $d_{90}$ 1,63 $\mu$m, $d_{50}$ 0,84 $\mu$m, $d_{10}$ 0,45 $\mu$m.

Beispiel 5 (gemäß der Erfindung)

Beispiel 4 wurde mit der Änderung wiederholt, daß das Calcinat im Graphittiegel 7 Stunden bei 1650 °C behandelt wurde.

Das resultierende Aluminiumnitrid enthielt 1,1 % O und 0,20 % C, $\alpha$-$Al_2O_3$ war nicht nachweisbar und seine Kornverteilung betrug $d_{90}$ 1,98 $\mu$m, $d_{50}$ 1,13 $\mu$m, $d_{10}$ 0,79 $\mu$m.

Beispiel 6 (gemäß der Erfindung)

75 g wasserhaltiger Böhmit (AlOOH; mit 42,2 % Al, < 20 ppm Na, < 10 ppm Ca, 40 ppm $\overline{Si, 40}$ ppm Fe; BET-Oberfläche: 140 $m^2$/g; Kornverteilung: $d_{90}$ 37 $\mu$m, $d_{50}$ 7,2 $\mu$m, $d_{10}$ 0,4 $\mu$m) wurden im Trockenschrank 5 Stunden bei 250 °C an Luft unter Bildung von 70,8 g getrockneten Böhmits behandelt.

Der getrocknete Böhmit wurde zusammen mit 25,5 g des in Beispiel 1 verwendeten Rußes entsprechend einem Molverhältnis Al : C = 1 : 1,8 in 1 l 2-Propanol gegeben und gemeinsam 4 Stunden lang in einer Rührwerkskugelmühle vermahlen. Von der resultierenden Suspension wurde das 2-Propanol abdestilliert und das Mahlgut getrocknet.

10 Mahlansätze der beschriebenen Art wurden vereinigt und unter Durchleiten von Stickstoff zunächst 1,5 Stunden bei 450 °C und anschließend 2 Stunden bei 700 °C calciniert. 655 g dieses Calcinates wurden in einem Graphittiegel (12 cm Innendurchmesser) unter Durchleiten von 200 l/h Stickstoff 1,5 Stunden bei 1250 °C und anschließend 20 Stunden bei 1550 °C behandelt. Nach dem Abkühlen wurde der Gewichtsverlust zu 38,7 Gewichts-% ermittelt.

Nach einstündigem Erhitzen des Reaktionsproduktes an Luft auf 700 °C wurde unter einem Gewichtsverlust von 8,8 % weißes bis hellgraues Aluminiumnitrids (AlN; mit 1,3 % O, 0,04 % C, < 20 ppm Na, 30 ppm Ca, 80 ppm Si, 20 ppm Fe; BET-Oberfläche: 3,5 $m^2$/g; Kornverteilung: $d_{90}$ 2,18 $\mu$m, $d_{50}$ 1,11 $\mu$m, $d_{10}$ 0,68 $\mu$m; $\alpha$-$Al_2O_3$ nicht nachweisbar) erhalten.

Beispiel 7 (gemäß der Erfindung)

25,5 g des in Beispiel 1 verwendeten Rußes wurden in 0,5 l 2-Propanol gegeben und 4 Stunden lang in einer Rührwerkskugelmühle vermahlen.

Gleichzeitig wurden 73 g des in Beispiel 1 verwendeten Böhmits in 0,5 l 2-Propanol gegeben und 4 Stunden lang in einer Rührwerkskugelmühle vermahlen.

In die AlOOH-Suspension wurde innerhalb von 5 Minuten die Ruß-Suspension untergerührt. Von der resultierenden Gesamtsuspension wurde das 2-Propanol abdestilliert und das Mahlgut getrocknet.

250 g Mahlgut (aus 4 Ansätzen der beschriebenen Art) wurden im Stickstoffstrom 2 Stunden bei 430 °C und anschließend 1,5 Stunden bei 800 °C calciniert und dann 20 Stunden bei 1550 °C behandelt. Nach einstündigem Erhitzen des Reaktionsproduktes an Luft auf 700 °C wurden 115 g weißes bis hellgraues Aluminiumnitrid ( AlN; mit 1,1 % O, 0,07 % C, 0,93 % $\alpha$-Al$_2$O$_3$; Kornverteilung: d$_{90}$ 2,5 $\mu$m, d$_{50}$ 1,5 $\mu$m, d$_{10}$ 0,90 $\mu$m) erhalten. Beispiel 8 (Vergleichsbeispiel)

200 g des in Beispiel 1 verwendeten Aluminiumhydroxids wurden in 1 l 2-Propanol gegeben und 4 Stunden in einer Rührwerkskugelmühle vermahlen.

Von der resultierenden Suspension wurde das 2-Propanol abdestilliert und das Mahlgut getrocknet sowie 2 Stunden an Luft bei 950 °C geglüht. Das dabei entstandene Aluminiumoxid (mit 50 ppm Na, 50 ppm Si, 35 ppm Fe; BET-Oberfläche: 91 m$^2$/g; Kornverteilung: d$_{90}$ 3,5 $\mu$m, d$_{50}$ 1,43 $\mu$m, d$_{10}$ 0,44 $\mu$m) wurde in drei Chargen mit dem in Beispiel 1 verwendeten Ruß im Molverhältnis Al : C = 1: 1,65 gemischt und 4 Stunden lang in einer Kugelmühle (Inhalt: 2 l; Innenwand: Polyethylen; Mahlkugeln aus Al$_2$O$_3$ mit 15 mm Durchmesser) unter Verwendung von 2-Propanol als Mahlflüssigkeit vermischt. Nach Abdestillation des 2-Propanols wurde das Gemisch getrocknet.

195 g des getrockneten Gemisches wurden unter Durchleiten von Stickstoff 14 Stunden bei 1550 °C behandelt.

Nach einstündigem Erhitzen des Reaktionsproduktes an Luft auf 700 °C wurde Aluminiumnitrid (AlN; mit 1,3 % O, 0,05 % C, 1,72 % $\alpha$-Al$_2$O$_3$; BET-Oberfläche: 2 m$^2$/g; Kornverteilung: d$_{90}$ 5,8 $\mu$m, d$_{50}$ 3,0 $\mu$m, d$_{10}$ 1,45 $\mu$m) erhalten.

## Patentansprüche

1. Verfahren zur Herstellung von feinteiligem Aluminiumnitrid durch Umsetzung von Hydroxiden des Aluminiums mit Kohlenstoff im Molverhältnis (1 : 1,5) bis (1 : 2,5), indem man
   a) die Hydroxide des Aluminiums gemeinsam mit Kohlenstoff, insbesondere Ruß, unter Verwendung einer nichtwäßrigen Mahlflüssigkeit intensiv mahlt,
   b) die nichtwäßrige Mahlflüssigkeit von der Suspension unter Erhalt eines Mahlgutes abtrennt,
   c) das Mahlgut unter Durchleiten von Stickstoff bei 400 bis 1000 °C calciniert,
   d) das gemäß c) erhaltene Material unter intensiver Berührung mit Stickstoff 1 bis 100 Stunden bei 1400 bis 1700 °C behandelt,
   e) den im Umsetzungsprodukt gemäß d) enthaltenen überschüssigen Kohlenstoff durch Erhitzen auf 500 bis 900 °C in Kontakt mit Sauerstoff enthaltenden Gasen entfernt.

2. Abänderung des Verfahrens nach Anspruch 1, dadurch gekennzeichnet, daß man die Hydroxide des Aluminiums und den Kohlenstoff jeweils getrennt unter Verwendung einer nichtwäßrigen Mahlflüssigkeit intensiv mahlt und die erhaltenen Suspensionen vermischt.

3. Verfahren nach Anspruch 1 oder 2, dadurch gekennzeichnet, daß man die Hydroxide des Aluminiums vor ihrem Eintrag in die nichtwäßrige Mahlflüssigkeit bei Temperaturen bis zu 300 °C zur Entfernung ihres Haftwassers trocknet.

4. Verfahren nach mindestens einem der Ansprüche 1 bis 3, dadurch gekennzeichnet, daß die Hydroxide des Aluminiums Korngrößen d$_{50}$ > 2 $\mu$m aufweisen.

5. Verfahren nach mindestens einem der Ansprüche 1 bis 4, dadurch gekennzeichnet, daß der Kohlenstoff Korngrößen < 2 $\mu$m aufweist.

6. Verfahren nach mindestens einem der Ansprüche 1 bis 5, dadurch gekennzeichnet, daß man das Mahlgut vor dem Calcinieren bei Temperaturen bis zu 300 °C trocknet.

7. Verfahren nach mindestens einem der Ansprüche 1 bis 6, dadurch gekennzeichnet, daß man das calcinierte Material unter Durchleiten von Stickstoff 0,1 bis 10 Stunden auf 1100 bis 1350 °C erhitzt.

8. Verfahren nach mindestens einem der Ansprüche 1 bis 7, dadurch gekennzeichnet, daß als wasserfreie Mahlflüssigkeit Kohlenwasserstoffe dienen.

9. Verfahren nach mindestens einem der Ansprüche 1 bis 7, dadurch gekennzeichnet, daß als wasserfreie Mahlflüssigkeit aliphatische Alkohole dienen.

**10.** Verfahren nach Anspruch 9, dadurch gekennzeichnet, daß 2-Propanol verwendet ist.

**11.** Verfahren nach mindestens einem der Ansprüche 1 bis 10, dadurch gekennzeichnet, daß als
Hydroxid des Aluminiums AlOOH verwendet
ist.

**12.** Verfahren nach mindestens einem der Ansprüche 1 bis 7, dadurch gekennzeichnet, daß als
Hydroxid des Aluminiums Al(OH)$_3$ verwendet
ist.

**Europäisches Patentamt**

# EUROPÄISCHER RECHERCHENBERICHT

Nummer der Anmeldung

**EP 91 10 8753**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN Band 13, Nr. 134 (C-581)(3482), 4. April 1989; & JP - A - 63297207 (IBIDEN CO LTD) 05.12.1988 – – – | 1 | C 01 B 21/072 |
| A | PATENT ABSTRACTS OF JAPAN Band 10, Nr. 350 (C-387)(2406), 26. November 1986; & JP - A - 61151006 (TOSHIBA CORP.) 09.07.1986 – – – | 1 | |
| A | PATENT ABSTRACTS OF JAPAN Band 12, Nr. 237 (C-509)(3084), 6. Juli 1988; & JP - A - 6330307 (BRIDGESTONE CORP) 09.02.1988 – – – | 1 | |
| A | PATENT ABSTRACTS OF JAPAN Band 9, Nr. 192 (C-296)(1915), 8. August 1985; & JP - A - 6060910 (TOKUYAMA SODA K.K.) 08.04.1985 – – – – – | 1 | |
| | | | **RECHERCHIERTE SACHGEBIETE (Int. Cl.5)** |
| | | | C 01 B 21/072 |

Der vorliegende Recherchenbericht wurde für alle Patentansprüche erstellt

| Recherchenort | Abschlußdatum der Recherche | Prüfer |
|---|---|---|
| Berlin | 16 Oktober 91 | CLEMENT J.P. |